# EUROPÄISCHE PATENTANMELDUNG

(11) **EP 1 982 581 A1**
(43) Veröffentlichungstag der Anmeldung: **22.10.2008**
(21) Anmeldenummer: 07007940.5
(22) Anmeldetag: 19.04.2007
(51) Int. Cl.: A01G 23/099

(54) **Einschlaghammer für Holzmarkierungsplättchen**

(71) Anmelder: Latschbacher GmbH, 4484 Kronstorf (AT)
(72) Erfinder: Latschbacher, Klaus, 4484 Kronstorf (AT)
(74) Vertreter: Vetter, Hans

(57) **Zusammenfassung**

Es wird ein Einschlaghammer für Holzmarkierungsplättchen mit einem an einem Handstiel (10) gehaltenen Hammerkopf (11) vorgeschlagen, der an einer Seite eine Halteaufnahme (13) für einzuschlagende Holzmarkierungsplättchen und an der gegenüberliegenden Seite ein Axt-Schneidblatt (14) aufweist. Der Mittelbereich (12) zwischen der Halteaufnahme (13) und dem Axt-Schneidblatt (14) verbreitert sich quer zur Ebene des Axt-Schneidblatts (14) rampenartig zur Halteaufnahme (13) hin bis zu einer Breite, die größer als die der Halteaufnahme (13) ist. Hierdurch wird erreicht, dass beim Abschlagen von Rinde mittels des Axt-Schneidblatts (14) von einem Stammholz Rindenmaterial und Stammholzmaterial am Hammerkopf (11) vorbeigeführt werden, ohne die Halteaufnahme (13) oder ein daran befindliches Holzmarkierungsplättchen zu beschädigen oder abzustreifen.

## Beschreibung

Die Erfindung betrifft einen Einschlaghammer für Holzmarkierungsplättchen, mit einem an einem Handstiel gehaltenen Hammerkopf, der an einer Seite eine Halteaufnahme für einzuschlagende Holzmarkierungsplättchen und an der gegenüberliegenden Seite ein Axt-Schneidblatt aufweist.

Derartige Einschlaghämmer werden zum Einschlagen von Holzmarkierungsplättchen in Holz, insbesondere Stammholz, eingesetzt, wie sie beispielsweise in der EP-B-1286325 beschrieben sind. Derartige Holzmarkierungsplättchen besitzen an der einen Flachseite Einschlagelemente, die beim Einschlagen in das Holz eindringen und das Plättchen dort verankern, und an der gegenüberliegenden Flachseite Abnahmehaken zum Abnehmen beziehungsweise Aufnehmen der Plättchen mittels der Halteaufnahme aus einem Plättchenmagazin.

Soll ein solches Holzmarkierungsplättchen an einer Stelle eingeschlagen werden, die von Rinde bedeckt ist, so ist es meistens zweckmäßig, diese Rinde mittels des Axt-Schneidblatts des Einschlaghammers abzuschlagen, bevor das Holzmarkierungsplättchen an dieser Stelle fixiert wird. Dabei besteht die Gefahr, dass beim Abschlagen der Rinde infolge des Vorbeigleitens des Einschlaghammers am Holz die Halteaufnahme oder das bereits daran befindliche Plättchen beschädigt oder abgestreift wird.

Eine Aufgabe der vorliegenden Erfindung besteht darin, einen Einschlaghammer für Holzmarkierungsplättchen so auszubilden, dass beim Abschlagen von Rinde die Halteaufnahme oder ein bereits daran angebrachtes Holzmarkierungsplättchen nicht beschädigt oder abgestreift wird.

Diese Aufgabe wird erfindungsgemäß durch einen Einschlaghammer mit den Merkmalen des Anspruchs 1 gelöst.

In vorteilhafter Weise ist der Mittelbereich des Hammerkopfes quer zur Ebene des Axt-Schneidblatts rampenartig zur Halteaufnahme hin verbreitert bis zu einer Breite, die größer als die der Halteaufnahme ist, sodass sowohl der Holzstamm als auch das abgetragene Rindenmaterial rampenartig so am Hammerkopf vorbeigeführt werden, dass eine derartige Beschädigung oder ein Lösen der Halteaufnahme oder eines daran angebrachten Holzmarkierungsplättchens nicht mehr auftreten kann. Auch nach einer Vielzahl von Hammerschlägen beziehungsweise Axtschlägen können solche Beschädigungen oder ein solches Lösen nicht mehr auftreten.

Durch die in den Unteransprüchen aufgeführten Maßnahmen sind vorteilhafte Weiterbildungen und Verbesserungen des im Anspruch 1 angegebenen Einschlaghammers möglich.

In vorteilhafter Weise ist das Axt-Schneidblatt gekröpft, das heißt, der mit der Schneide versehene freie Endbereich des Axt-Schneidblatts ist über eine Krümmung seitlich versetzt zum Anfangsbereich angeordnet, wobei die Krümmung aus zwei entgegengesetzt gekrümmten Teilkrümmungen besteht. Hierdurch wird verhindert, dass die Schneide beim Abschlagen von Rinde in das Holz eindringt, sondern parallel die Rinde abschält.

Die Halteaufnahme besteht vorzugsweise aus einem starren, insbesondere metallischen Halteteil und einem elastischen, das Halteteil mit dem Mittelbereich des Hammerkopfs verbindenden Verbindungselement. Durch diese elastische Verbindung wird erreicht, dass sich die Kraft des Hammerschlags auch bei schrägem Ansetzen möglichst gleichmäßig auf das Plättchen verteilt. Dadurch wird auch verhindert, dass Haltevorsprünge oder Schneidvorsprünge des Holzmarkierungsplättchens abbrechen.

Das elastische Verbindungselement besitzt einen radial überstehenden ringförmigen Wulstbereich, der zur Verbesserung der stabilen Position des Halteteils bei gewährleisteter Elastizität beiträgt.

Liegt ein derartiger radial überstehender ringförmiger Wulstbereich vor, so wird zweckmäßigerweise die größte Breite des rampenartigen Mittelbereichs des Hammerkopfs quer zur Ebene des Axt-Schneidblatts größer als die des elastischen Verbindungselements beziehungsweise dessen Wulstbereichs gewählt.

Als vorteilhaft hat es sich auch erwiesen, wenn sich die Breite des rampenartigen Mittelbereichs zum Axt-Schneidblatt hin bis zu einer Breite verringert, die der der Blattstärke des Axt-Schneidblatts entspricht oder im Wesentlichen entspricht. Hierdurch wird das parallele Gleiten der Schneide des Axt-Schneidblatts hinter der Rinde des Holzes unterstützt, und es wird verhindert, dass eine störende Kante oder dergleichen die Schlagbewegung des Einschlaghammers beim Abtrennen von Rinde beeinträchtigt.

Zwei Ausführungsbeispiele der Erfindung sind in der Zeichnung dargestellt und in der nachfolgenden Beschreibung näher erläutert. Es zeigen:
- Figur 1: eine Seitenansicht des Einschlaghammers als erstes Ausführungsbeispiel der Erfindung, wobei die Halteaufnahme im Schnitt dargestellt ist,
- Figur 2: eine Ansicht des in Figur 1 dargestellten Einschlaghammers von oben,
- Figur 3: ein gegenüber Figur 1 modifiziertes zweites Ausführungsbeispiel mit genutetem Mittelbereich und
- Figur 4: der Mittelbereich des in Figur 3 dargestellten Einschlaghammers im Schnitt gemäß der Schnittlinie B-B.

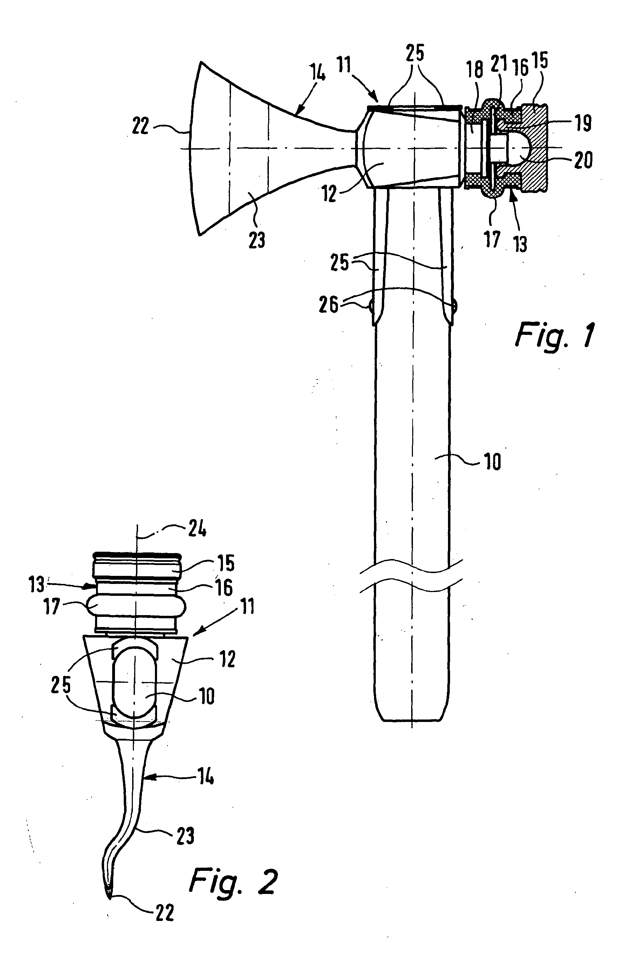

Der in den Figuren 1 und 2 als erstes Ausführungsbeispiel dargestellte Einschlaghammer besteht aus einem an einem Handstiel 10 gehaltenen Hammerkopf 11. Der Hammerkopf 11 besteht aus einem Mittelbereich 12, an dem sich an der einen Seite eine Halteaufnahme 13 und an der gegenüberliegenden Seite ein Axt-Schneidblatt 14 anfügt.

Die Halteaufnahme 13 besteht aus einem metallischen, kreisscheibenförmigen Halteteil 15 und einem elastischen Verbindungselement 16, das rohrartig geformt ist und im mittleren Bereich einen radial überstehenden, ringförmigen Wulstbereich 17 besitzt. Das elastische Verbindungselement 16 ist an einem Haltefortsatz 18 des Mittelbereichs 12 elastisch verklemmt, während am gegenüberliegenden freien Ende ein Haltefortsatz 19 des Halteteils 15 in das elastische Verbindungselement 16 eingreift. Ein teilkugelartiger Fortsatz 20 greift dabei ins Innere des eine entsprechende Ausnehmung besitzenden Halteteils 15 ein und bildet zusammen mit diesem ein Kugelgelenk. Zur Stabilisierung greift eine Ringscheibe 21 von innen her in den Wulstbereich 17 ein.

Das an der gegenüberliegenden Seite des Mittelbereichs 12 angesetzte oder angeformte Axt-Schneidblatt 14 ist gemäß Figur 2 gekröpft ausgebildet, das heißt, der mit der Schneide 22 versehene Endbereich des Axt-Schneidblatts 14 ist über eine Krümmung 23 seitlich versetzt zum Anfangsbereich angeordnet, wobei die Krümmung 23 aus zwei entgegengesetzt gekrümmten Teilkrümmungen besteht. Der mit der Schneide 22 versehene gekröpfte Endbereich des Axt-Schneidblatts 14 ist im Ausführungsbeispiel nicht parallel zum Anfangsbereich des Axt-Schneidblatts 14 ausgerichtet, sondern leicht zur Symmetrieebene 24 des Einschlaghammers hin geneigt. Durch diese leichte Winkelneigung kann die Schlagrichtung der Schneide 22 beim Abschlagen von Rinde von einem Stammholz optimiert werden.

Wie aus Figur 2 erkennbar ist, ist der Mittelbereich 12 quer zur Symmetrieebene 24 beziehungsweise zur Ebene des Hauptbereichs des Axt-Schneidblatts 14 rampenartig zur Halteaufnahme 13 hin verbreitert bis zu einer Breite, die größer als die der Halteaufnahme 13 ist, also beim Ausführungsbeispiel breiter als der Wulstbereich 17. Entsprechend verringert sich die Breite zum Axt-Schneidblatt 14 hin bis zu einer Breite, die im Wesentlichen der Blattstärke des Axt-Schneidblatts 14 am Ansatzbereich zum Mittelbereich 12 hin entspricht. Im Ausführungsbeispiel ist diese minimale Breite des Mittelbereichs 12 an der Verbindungsstelle zum Axt-Schneidblatt 14 zwar geringfügig breiter als die Blattstärke, jedoch ist dieser Übergangsbereich zusätzlich stärker zum Axt-Schneidblatt 14 hin abgeschrägt oder abgerundet, um jegliche Kanten zu vermeiden, die das Vorbeiführen von abgetragenem Rindenmaterial oder Stammmaterial behindern könnten.

Zur Fixierung des Hammerkopfes 11 auf dem Handstiel 10 greift das entsprechende Ende des Handstiels 10 in eine entsprechende Durchgangsöffnung durch den Mittelbereich 12 des Hammerkopfes 11 ein, wobei zwei Haltehaken 25 gemäß Figur 2 diesen Mittelbereich 12 etwas übergreifen und sich dann entlang des Handstiels 10 an gegenüberliegenden Seiten desselben erstrecken. Die Fixierung der am Handstiel 10 entlang sich erstreckenden Bereiche der Haltehaken 25 erfolgt mittels Fixierelementen 26, wie Nägel oder Schrauben.

Die mittels des Einschlaghammers einzuschlagenden Holzmarkierungsplättchen bestehen üblicherweise aus Kunststoff, jedoch können auch entsprechende Metallplättchen eingeschlagen werden. In diesem Falle wird das Halteteil 15 permanentmagnetisch ausgebildet oder es enthält einen Permanentmagneteinsatz.

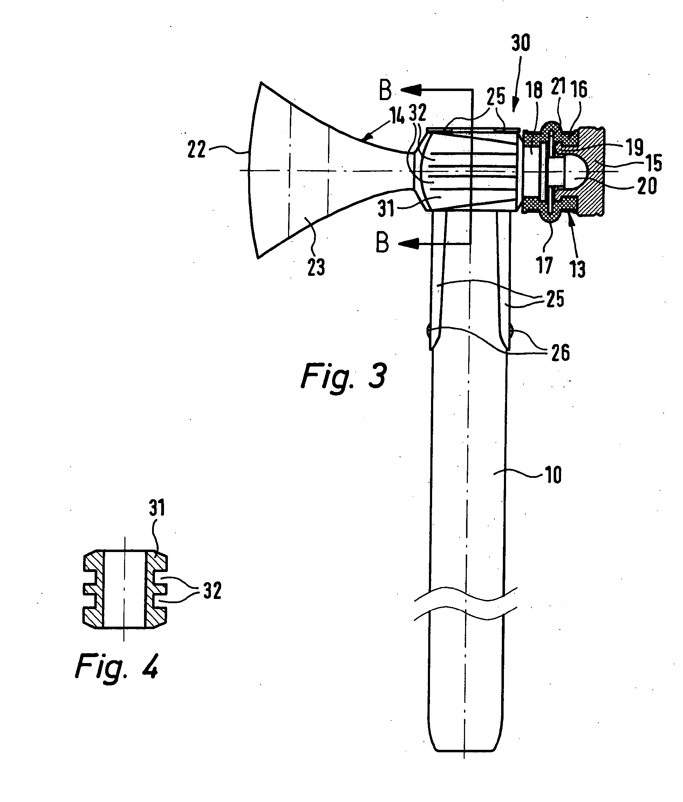

Der in den Figuren 3 und 4 als zweites Ausführungsbeispiel dargestellte Einschlaghammer besitzt einen gegenüber dem ersten Ausführungsbeispiel modifizierten Hammerkopf 30 mit einem Nuten 32 aufweisenden geänderten Mittelteil 31. Alle übrigen Bereiche und Details sind gegenüber dem ersten Ausführungsbeispiel unverändert und tragen dieselben Bezugszeichen.

An jeder Seite des Mittelteils 31 erstrecken sich zwei Nuten in Schlagrichtung, also zwischen Axt-Schneidblatt 14 und Halteaufnahme 13. Sie dienen einerseits zur Gewichtsreduzierung und verbessern andererseits die Führung des Hammers beim Abschlagen von Rindenmaterial. Entsprechend der rampenartigen Verbreiterung des Mittelteils 31 gemäß dem Mittelteil 12 vergrößert sich die Tiefe der Nuten 32 zum breiteren Endbereich hin. Die Anzahl, die Nuttiefe und der Nuttiefenverlauf der Nuten 32 kann jedoch auch variieren.

## Patentansprüche

1. Einschlaghammer für Holzmarkierungsplättchen, mit einem an einem Handstiel (10) gehaltenen Hammerkopf (11;30), der an einer Seite eine Halteaufnahme (13) für einzuschlagende Holzmarkierungsplättchen und an der gegenüberliegenden Seite ein Axt-Schneidblatt (14) aufweist, wobei sich der Mittelbereich (12;31) zwischen der Halteaufnahme (13) und dem Axt-Schneidblatt (14) quer zur Ebene des Axt-Schneidblatts (14) rampenartig zur Halteaufnahme (13) hin verbreitert bis zu einer Breite, die größer als die der Halteaufnahme (13) ist.

2. Einschlaghammer nach Anspruch 1, **dadurch gekennzeichnet, dass** das Axt-Schneidblatt (14) gekröpft ist.

3. Einschlaghammer nach Anspruch 1 oder 2, **dadurch gekennzeichnet, dass** die Halteaufnahme (13) aus einem starren, insbesondere metallischen Halteteil (15) und einem elastischen, das Halteteil (15) mit dem Mittelbereich (12) verbindenden Verbindungselement (16) besteht.

4. Einschlaghammer nach Anspruch 3, **dadurch gekennzeichnet, dass** das elastische Verbindungselement (16) einen radial überstehenden, ringförmigen Wulstbereich (17) besitzt.

5. Einschlaghammer nach Anspruch 3 oder 4, **dadurch gekennzeichnet, dass** die größte Breite des rampenartigen Mittelbereichs (12;31) quer zur Ebene des Axt-Schneidblatts (14) größer als die des elastischen Verbindungselements (16) ist.

6. Einschlaghammer nach einem der vorhergehenden Ansprüche, **dadurch gekennzeichnet, dass** sich die Breite des rampenartigen Mittelbereichs (12;31) zum Axt-Schneidblatt (14) hin bis zu einer Breite verringert, die der der Blattstärke des Axt-Schneidblatts (14) entspricht oder nahezu entspricht.

7. Einschlaghammer nach einem der vorhergehenden Ansprüche, **dadurch gekennzeichnet, dass** das Halteteil (15) der Halteaufnahme (13) kugelgelenkartig mit dem Mittelbereich (12;31) verbunden ist.

8. Einschlaghammer nach einem der vorhergehenden Ansprüche, **dadurch gekennzeichnet, dass** der Mittelbereich (31) des Hammerkopfs (30) mit seitlichen Nuten (32) versehen ist, die sich in der Schlagrichtung des Einschlaghammers erstrecken.
